# EUROPÄISCHE PATENTANMELDUNG

(11) **EP 0 728 637 A1**
(43) Veröffentlichungstag der Anmeldung: **28.08.1996**
(21) Anmeldenummer: 96102673.9
(22) Anmeldetag: 22.02.1996
(51) Int. Cl.: B60R 22/00, B60R 22/32

(54) **Trennvorrichtung für Sicherheitsgurte**

(30) Priorität: 23.02.1995 DE 19506277
(71) Anmelder: Fischer, Johann-Peter, 47669 Wachtendonk (DE)
(72) Erfinder: Fischer, Johann-Peter, 47669 Wachtendonk (DE)

(57) **Zusammenfassung**

Der Erfindung liegt das Problem zur schellen Befreiung von verunfallten Fahrzeuginsassen zu Grunde.
Zur Lösung des Problems waren drei Faktoren zu beachten.
1.Die Möglichkeit zur Eigenbefreiung bei verklemmten Gurtschlössern.
2.Die Befreiung von Außen durch Helfer.
3.Die gut sichtbare Anordnung der Trennvorrichtung.
Die hier beschriebene Trennvorrichtung wird an die "B - Säule" des KFZ als Gurtführung montiert. Somit ist sie gut sichtbar und von Außen gut zugänglich. Auf Grund dieser Anordnung bietet sie aber auch die Einfache Möglichkeit zur Eigenauslösung bzw. Trennung des Gurtes von den Insassen selbst.
Der betreffende Sicherheitsgurt wird durch die Trennvorrichtung geführt und kreuzt in seiner Bahn eine schräg gestellte Klinge. Diese ist in einem Auslösehebel gesichert und kann den Gurt im Ruhezustand nicht beschädigen. Bei Betätigung des Auslösehebels trennt die Klinge den Gurt in seiner vollen Breite. Der Insasse kann aus dem KFZ gezogen werden.
Die Erfindung wurde preisbewusst konstruiert, da sie nur aus drei Kunststoffteilen besteht. Ebenso ist eine nachträgliche Montage durch den Nichtfachmann möglich.

## Beschreibung

Die Erfindung betrifft eine Trennvorrichtung für Sicherheitsgurte zur Sicherung von Fahrzeuginsassen mit einem relativ zum Gurt bewegbaren Trennmesser, dessen vorgegebene Bahn den Gurt in seiner ganzen Breite durchquert.
Alle bekannten Sicherheitssysteme zur Sicherung von Fahrzeuginsassen weisen unterschiedliche Befestigungsschlösser auf, wobei es im allgemeinen erforderlich ist, ein mit dem Gurt verbundenes Schließelement in ein im Fahrzeug festverbundenes Schließelement einzurasten.
Um diese Verbindung wieder zu lösen, sind unterschiedliche Mechanismen vorgesehen, welche für nicht mit dem System der Wiederöffnung des Gurtsystems vertraute Personen bei der Öffnung des Gurtes Schwierigkeiten haben könnten.
Bei einem eingetretenen Notfall wirkt sich dieses sehr nachteilig aus, weil wertvolle Zeit verloren geht, ehe die hilfsbedürftigen, verunfallten Personen von Helfern aus dem Fahrzeug befreit werden können. Ebenso besteht die Möglichkeit, daß bei seitlichen Unfällen die Karosserie so verzogen ist, daß die stets mittig angebrachten Gurtschlösser nicht mehr gelöst werden können.

Es ist deshalb von Nöten, nach einer Trennvorrichtung, welche es im Notfall ermöglicht, unabhängig von den Schlössern der Sicherheitsgurte, auf einfache Weise und an einer von Außen zugänglichen Stelle die Sicherheitsgurte zu durchtrennen, zu forschen.
**Dieses Problem ist an sich allgemein bekannt.**
So werden in den verschiedenen Schriften Trennsysteme beschrieben, welche z.B. auf dem Gurt montiert werden, diesen aber in seiner Funktion behindern, wie in der **DE - OS 2601003.**
Auch die bekannten, stationär befestigten Trennsystem für Sicherheitsgurte, wie in der
**DE 2926880 ,**
**DE 3204063 ,**
**DE 3222551 ,**
**DE 3413024 ,**
weisen gewisse Nachteile auf.
Trennsysteme, welche mit Reissmessern arbeiten, erfordern zuviel Kraftaufwand und gewisse Vorkenntnisse im Umgang mit denselben. Eine einwandfreie Trennung des Gurtes kann somit nicht gewährleistet werden.
Trennsysteme, welche mit Trennmessern, quer zum Gurt angebracht arbeiten, benötigen zuviel Platz für deren Auslösung. Dieser benötigte Raum kann bei einem verunfalltem Fahrzeug nicht mehr zur Verfügung stehen. Weiterhin sind alle bekannten Trennvorrichtungen so ausgelegt, daß sie nur von Außen, durch Helfer, ausgelöst werden können. Die Möglichkeit zur einfachen, sicheren und bequemen Eigenbefreiung bietet keines der vorkommenden Systeme.
Weiterhin gehen alle bekannten Systeme davon aus, den Gurt in einer parallel zum Messer befindlichen Laufbahn zu trennen,was aber mit den bekannten Systemen nicht gewährleistet ist.

Der Gurt wird in einer senkrechten Laufbahn stets in einem mindestens 45 Grad Winkel vom oberen Befestigungspunkt aus zum und über den Fahrzeuginsassen gelenkt. Betätigt man nun eines der bekannten Systeme, ist die optimale Funktion nicht mehr gewährleistet, da die vorgegebene Laufbahn das vorhandene Trennmesser nicht in seiner vollen Breite quert.

Der Erfindung liegt die Aufgabe zugrunde, eine optimale Trennvorrichtung für Sicherheitsgurte zu schaffen, welche die Möglichkeit bietet, die Trennvorrichtung an einer in allen Fahrzeugen gleichbleibenden Stelle so anzubringen, daß fremden Helfern die Möglichkeit gegeben ist, rasch die erforderlichen Hilfsmaßnahmen durchzuführen. Ebenfalls ist durch das Anbringen der Trennvorrichtung an einer gut zugänglichen Stelle zu gewährleisten, daß die Trennvorrichtung sofort von außen als eine solche erkannt werden kann, und auch, an dieser Stelle von den Insassen selbst ausgelöst werden kann. Ebenso muß gewährleistet sein, daß der Gurt in seiner vollen Breite das Trennmesser quert und somit optimal getrennt werden kann.
Als besonders zweckmäßig erwies sich daher die Ausstattung als Schulterführungsstück.
Hierin untergebracht, kann der Gurttrenner seine ihm zugedachte Funktion voll zur Wirkung bringen und gewährleistet die Funktion in allen erdenklichen Situationen.
Fast alle, heute zugelassenen Fahrzeuge, besitzen an der Innenseite des Türholms die Befestigung des Umlenkpunktes für den Sicherheitsgurt. Daran ist wiederum das Schulterführungsstück angebracht. Durch einen einfachen Austausch, oder der zusätzlichen, nachträglichen Montage der Schulterführung, wird der Gurtdurchtrenner hier angebracht. Der Sicherheitsgurt wird in seiner vollen Breite durch das Schulterführungsstück geführt.

Dabei kreuzt sein Weg das am unteren Ende der Schulterführung, quer zu seiner Laufbahn, mit schräger Schneidklinge ausgestattete Trennmesser und dessen starrer Gegenschneide.
Der lange Führungsweg durch das Schulterführungsstück gewährleistet immer eine optimale Trennung des Gurtes.

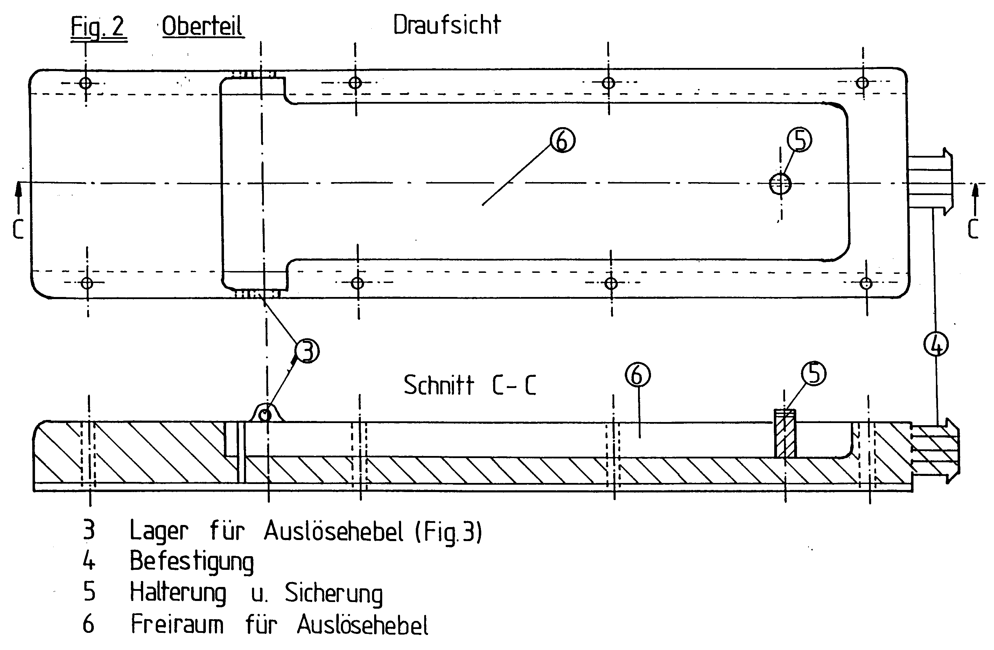

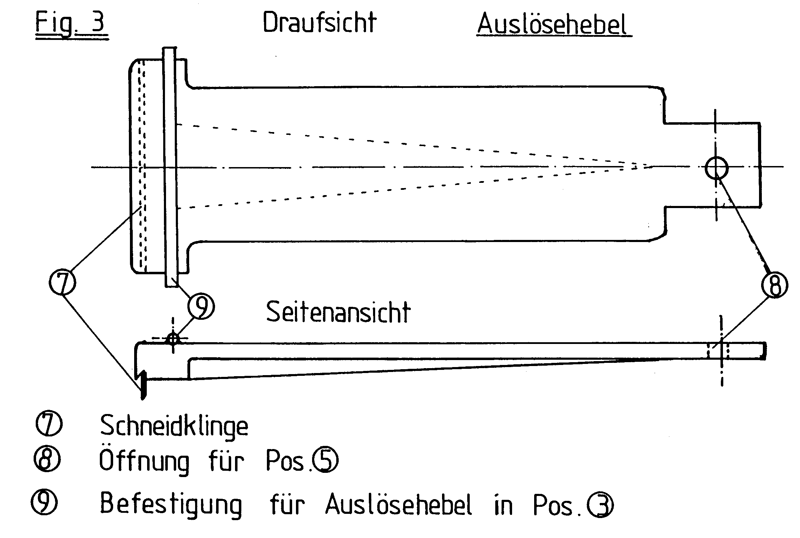

Das Gesamte Schulterführungsstück ist drehbar gelagert und sichert somit die Möglichkeit, den zu trennenden Gurt, auch bei einem stark deformierten Fahrzeug, durch das Drehen in eine optimale Auslöseposition, leicht zu trennen. Dies gilt ebenso für herbeigeeilte Helfer, wie für die Fahrzeuginsassen selbst.
Durch den langen Hebelweg des Auslösers (Fig.3) ist der erforderliche Kraftaufwand sehr gering.
Ein weiterer Vorteil dieser Ausstattung ist die Sicherung vor ungewolltem oder versehentlichem Auslösen des Gurtdurchtrenners, da der Auslösehebel in dem Schulterführungsstück versenkt ist und zusätzlich eine Kontrolle vor ungewolltem Auslösen bietet, da an der oberen Auslösehebelgriffpartie eine Öffnung für eine Verplombung o.ä. vorgesehen ist.
Eine Verplombung bietet gleichzeitig die Möglichkeit zur Kontrolle über die Intaktheit des Gurttrenners und des Gurtes durch zuständige Kontrollorgane.
Die Art und Anbringung des hier beschriebenen Gurtdurchtrenners stellt eine weitere Lösung vorhandener Probleme dar, weil alle bisher bekannten Gurtdurchtrenner verschiedenartig und von außen nicht erkennbar arbeiten.
Der hier beschriebene Gurtdurchtrenner ist von Außen sofort als ein solcher zu erkennen und läßt keine Fragen zu seiner Funktionsweise aufkommen.

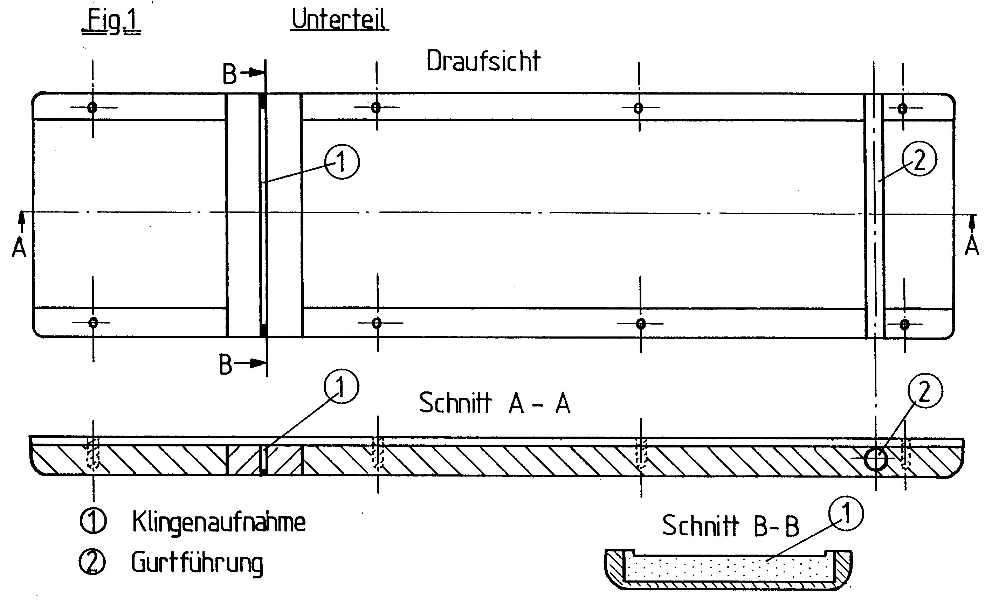

Bedingt durch seine Konstruktion und durch die Art der Befestigung ist der Gurtdurchtrenner um alle Achsen schwenkbar und somit nicht hinderlich im Fahrzeug. Letztlich liegt der Erfindung die Möglichkeit zur preiswerten Herstellung zu Grunde.
Alle bekannten Gurttrennsysteme arbeiten mit einer Vielzahl von Einzelteilen, deren Herstellung und Endmontage die Erfindung zu teuer werden lassen.
Die hier beschriebene Erfindung arbeitet im Wesentlichen mit vier Teilen. Diese sind :
1. Unterteil lt. Fig.1
2. Oberteil lt. Fig.2
3. Auslösehebel lt. Fig.3
4. Schneidklinge Teil (7)
ggf. werden noch 8 Schrauben und eine Plombe benötigt.

Anhand der folgenden Beschreibung werden die Zeichnungen zur Erfindung näher erörtert.
- **Fig. 1**: Unterteil in der Draufsicht und im Schnitt
- **Fig. 2**: Oberteil in der Draufsicht und im Schnitt
- **Fig. 3**: Auslösehebel in Draufsicht und Seitenansicht
- **Fig. 4**: Darstellung der Gesamtansicht des montierten Gurtdurchtrenners
- **Fig. 5**: Darstellung der Anordnung im Fahrzeug und die gute Sichtbarkeit von außen
- **Fig. 6**: Ausschnittvergrößerung der Fig. 5

Bei dem in Fig.1 gezeigten Unterteil ist die Klingenaufnahme (1) gleichzeitig als Gegenklinge ausgebildet.

Pos. (2) stellt eine Gurtführung dar, welche allerdings nicht unbedingt erforderlich ist.
Im Schnitt **B - B** ist deutlich das Gurtbett für die sichere Gurtführung zu erkennen.

In Fig. 2 wird das Oberteil dargestellt.
Pos. (3) ist die Aufnahme für den Auslösehebel nach Fig. 3 .
Pos. (4) zeigt die Art der einer möglichen Befestigung. sVorgesehen zur Befestigung ist die bereits in den meisten Fahrzeugen befindliche Halterung für die Schulterführung.
Die Schulterführungen können gegen den Gurtdurchtrenner ausgetauscht werden, indem man die im Fahrzeug angebrachte Halterung durch Einrasten in die Pos. (4) verbindet. Pos (5) zeigt den Zapfen, der zur Sicherung des Gurtdurchtrenners mit einer Bohrung zur Aufnahme des Plombendrahtes o.ä. versehen ist. Pos. (6) zeigt den benötigten Freiraum zur Aufnahme des Auslösehebels.

Fig. 3 veranschaulicht die Ausführung des Auslösehebels, welcher für die einwandfreie Trennung des Gurtes konzipiert ist. Pos. (7) zeigt die eingepresste, mit schräggestelltem Messer ausgestattete Schneidklinge Pos. (8) zeigt die Öffnung für Pos. (5) und Pos. (9) zeigt die Befestigung für den Auslösehebel, einzurasten in Pos. (3), Fig.2 (Oberteil).

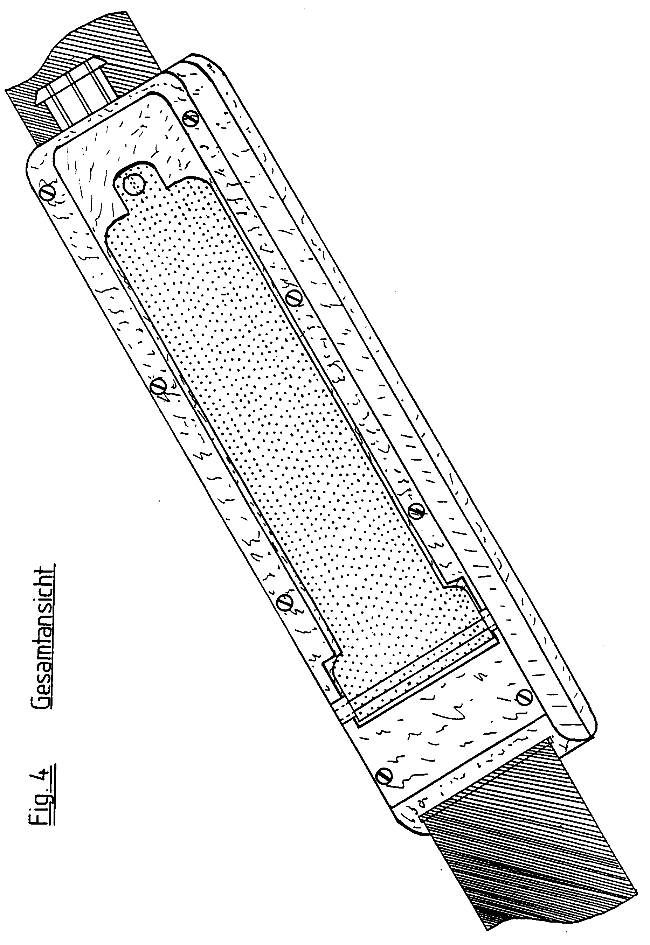

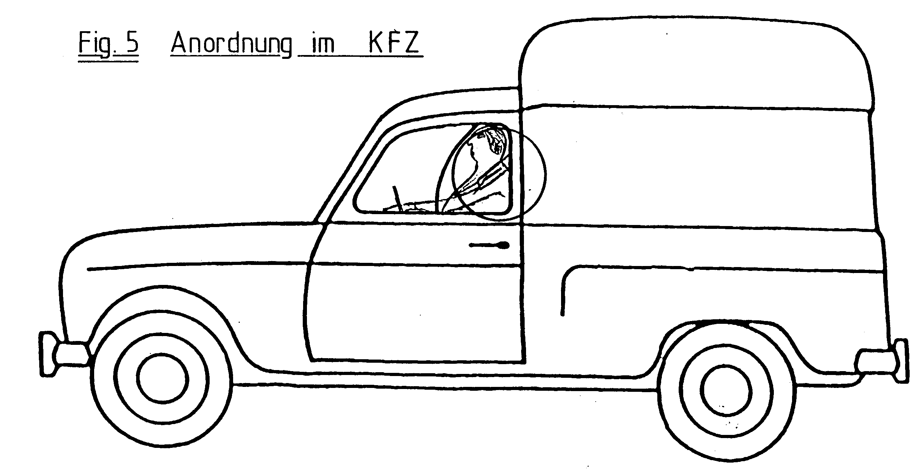

Fig. 4 zeigt den kompletten Gurtdurchtrenner mit angedeutetem, eingelegtem Sicherheitsgurt. Hieran ist erkennbar, daß der Gurt bis zum Trennpunkt gerade und parallel zum Trennmesser geführt wird.

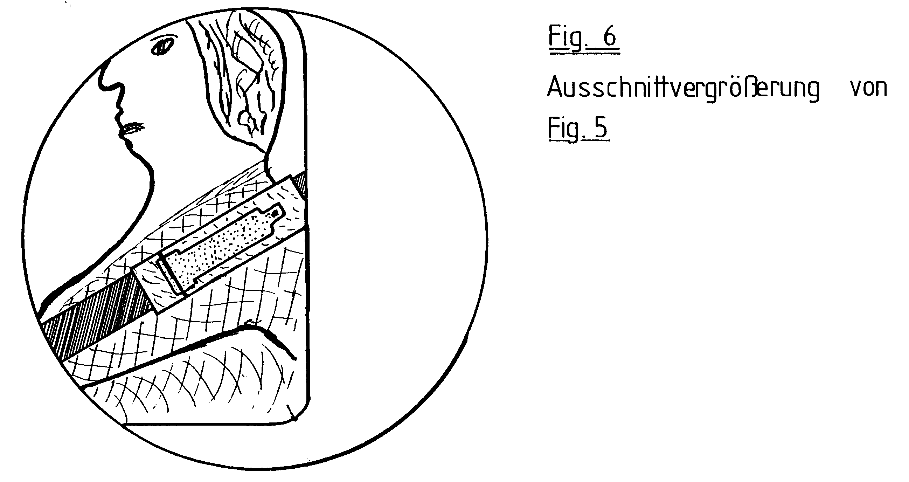

Fig. 5 veranschaulicht die Anordnung im KFZ, wobei die Ausschnittvergrößerung der Fig. 6 die gute Erkennung des Trennsystems nocheinmal veranschaulicht.
Auf ästhetische Formgebung und Design wurde hier aus Gründen der Einfachheit verzichtet.

## Patentansprüche

1. Trennvorrichtung für Sicherheitsgurte zur Sicherung und schnellen Befreiung von Fahrzeuginsassen mit einem relativ zum Gurt bewegbaren Trennmesser, dessen vorgegebene Bahn den Gurt in seiner ganzen Breite quert, dadurch gekennzeichnet, daR das Trennmesser (7) in einem Fahrzeug ortsfest anbringbarem, vom Sicherheitgurt durchquertem Beschlag geführt wird.

2. Trennvorrichtung nach Anspruch 1., dadurch gekennzeichnet, daß das Unterteil (Fig.1) eine dem Sicherheitsgurt zugewandte Gegenschneide (1) , hier Klingenaufnahme genannt, für das Trennmesser Fig.3. Pos. (7) aufweist, die derart angeordnet ist, daß sie bei Bewegung des Trennmessers zusammen mit diesem eine scherenartige Wirkung erzeugt.

3. Trennvorrichtung nach einem der vorhergehenden Ansprüche, dadurch gekennzeichnet, daß zur Betätigung des Trennmessers Fig. 3 eine durch eine Sicherung Pos.(5) und (8) gegen unbeabsichtigte Auslösung festgelegte Sicherung vorgesehen ist.

4. Trennvorrichtung nach Anspruch 3., dadurch gekennzeichnet, daß die Auslösung als Schwenkhebel vorgesehen ist und das die Sicherung aus einem, fest mit dem Oberteil, Fig.2, Pos.(5), bestehendem Zapfen besteht, welcher durch Verplombung o.ä. gegen ungewolltes und/oder versehentlichem Auslösen gesichert ist.

5. Trennvorrichtung nach einem der vorhergehenden Ansprüche, dadurch gekennzeichnet, daß der Sicherheitsgurt durch einen vorgesehenen Kanal , Fig.1, Schnitt **B - B,** und Fig. 4, geführt wird und somit gewährleistet ist, daß der Gurt im Bereich des Trennmessers optimal das Trennmesser quert und somit eine schnelle und einwandfreie Trennung ermöglicht wird.

6. Trennvorrichtung nach einem der vorhergehenden Ansprüchen, dadurch gekennzeichnet, daß der Auslösehebel Fig.3, nach dem Benutzen separat ausgetauscht werden kann, um somit die volle Funktion bei einem eventuellem weiteren Benutzen zu gewährleisten.

7. Trennvorrichtung nach einem der vorhergehenden Ansprüche, dadurch gekennzeichnet, daß die Aufnahme des Gurtdurchtrenners, Fig.2, Pos. (4), so ausgelegt ist, daß eine Montage im Austausch mit einem bereits vorhandenem Schulterführungsstück vorgenommen werden kann und die vorhandene Befestigung, welche fest mit dem oberen Umlenkpunkt im Fahrzeug verbunden ist, als Aufnahme dient.

8. Trennvorrichtung nach Anspruch 7., dadurch gekennzeichnet, daß die Trennvorrichtung bei nicht vorhandener Befestigungsmöglichkeit ortsfest angebracht werden kann, indem das Fahrzeug nachträglich mit einer entsprechenden Befestigung ausgerüstet werden kann.

9. Trennvorrichtung nach einem der vorhergehenden Ansprüche, dadurch gekennzeichnet, daß die Trennvorrichtung frei auf dem Gurt montiert wird und durch das Anbringen einer frei beweglichen Kette oder sonstigen Verbindung ortsfest angebracht werden kann und sich somit an der dafür vorgesehenen, stets gleichbleibenden Stelle befindet.

10. Trennvorrichtung nach einem der vorhergehenden Ansprüche, dadurch gekennzeichnet, daß die Auslösung des Trennmessers auf elektrischem, elektronischem oder elektromechanischem Weg ausgelöst werden kann, gegebenenfalls unter Zuhilfenahme der Auslöseelektronik eines vorhandenen Airbags o.ä..
